(19) **Europäisches Patentamt**

**European Patent Office**

**Office européen des brevets**

(11) **EP 1 525 330 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(51) Int Cl.:
***C22C 1/10*** *(2006.01)*     ***C04B 41/51*** *(2006.01)*

(21) Anmeldenummer: **03793644.0**

(22) Anmeldetag: **25.07.2003**

(86) Internationale Anmeldenummer:
**PCT/EP2003/008231**

(87) Internationale Veröffentlichungsnummer:
**WO 2004/022802 (18.03.2004 Gazette 2004/12)**

(54) **VERFAHREN ZUR HERSTELLUNG EINES BAUTEILS, BAUTEIL UND VERWENDUNG**

METHOD FOR PRODUCING A COMPONENT, COMPONENT AND USE THEREOF

PROCEDE DE PRODUCTION D'UN ELEMENT CONSTITUTIF, ELEMENT CONSTITUTIF CORRESPONDANT ET UTILISATION

(84) Benannte Vertragsstaaten:
**DE FR GB IT**

(30) Priorität: **10.08.2002 DE 10236751**

(43) Veröffentlichungstag der Anmeldung:
**27.04.2005 Patentblatt 2005/17**

(73) Patentinhaber: **DaimlerChrysler AG**
**70567 Stuttgart (DE)**

(72) Erfinder:
• **BOLDIN, Jürgen**
**89275 Elchingen (DE)**

• **HAUG, Tillmann**
**89264 Weissenhorn (DE)**
• **RAUSCHER, Steffen**
**71116 Gärtringen (DE)**
• **SCHEYDECKER, Michael**
**89278 Nersingen (DE)**
• **WEISSKOPF, Karl**
**73635 Rudersberg (DE)**

(56) Entgegenhaltungen:
**EP-A- 0 790 223**     **EP-A- 0 864 551**
**EP-A- 0 933 439**     **DE-A- 19 750 599**
**DE-A- 19 917 175**     **DE-C- 10 125 814**

## Beschreibung

Die Erfindung betrifft ein Verfahren zur Herstellung eines Bauteils umfassend einen Intermetallic-Keramik-Verbundwerkstoffs nach Anspruch 1 sowie ein Bauteil umfassend einen Intermetallic-Keramik-Verbundwerkstoff nach Anspruch 14 sowie eine Verwendung des Bauteils nach Anspruch 17.

Intermetallic-Keramik-Verbundwerkstoffe, wie sie z. B. in der DE 197 50 599 A1 beschrieben werden, basieren in der Regel auf eine Druckinfiltration einer porösen keramischen Preform durch ein flüssiges Metall, wobei das flüssige Metall in einer Reaktion Komponenten der Preform in intermetallische Phasen umwandelt.

Diese intermetallischen Phasen sind meistens hochtemperaturbeständig, verschleißbeständig und weisen eine hohe Oxidationsresistenz auf.

Für einige Anwendungen, z. B. als Bremse besitzen diese Werkstoffe jedoch eine zu geringe Wärmeleitfähigkeit, was u. a. zu hohen Wärmespannungen führt. Zudem belastet eine hohe Reaktivität zwischen Infiltrationsmetall (meistens Aluminium) und Preform wie im Beispiel der DE 197 50 599 Al die Standzeit der Druckgießwerkzeuge, was zu erhöhten Produktionskosten führt.

Die Aufgabe der Erfindung besteht darin, ein Verfahren zur Herstellung eines Bauteils mit einem Intermetallic-Keramik-Verbundwerkstoff und ein derartiges Bauteil bereitzustellen, das bei Hochtemperaturbelastung geringere Wärmespannungen aufweist, und in der Herstellung einen geringeren Werkzeugverschleiß verursacht.

Die Lösung der Aufgabe besteht in einem Verfahren mit den Merkmalen des Anspruchs 1, in einem Bauteil nach Anspruch 14, sowie in einer Verwendung nach Anspruch 17.

Das erfindungsgemäße Verfahren nach Anspruch 1 umfasst folgende Schritte:

Mindestens eine reaktive Komponente wird mit Hilfsstoffen gemischt. Die reaktive Komponente besteht zumindest teilweise aus Titanoxid. Hilfsstoffe können hierbei Bindemittel, Füllstoffe, Lösungsmittel oder anorganische Zusatzstoffe sein, Aus dieser Mischung wird auf an sich bekannte Weise eine poröse keramische Preform hergestellt. Die Preform weist eine offene Porosität zwischen 46 % und 60 % auf. Die Preform wird in ein Druckgiesswerkzeug eingelegt und mit einer Aluminiumlegierung (im Folgenden Aluminium genannt) unter Druck infiltriert. Durch die Infiltration wird ein Aluminium-Keramik-Verbundmaterial erzeugt, das im Folgenden vereinfacht PKI (poröse Keramik Infiltration) genannt wird. Das PKI-Material wird anschließend einer Temperaturbehandlung unterzogen.

Das PKI-Material kann zur Ausbildung von funktionalen Bereichen eines Bauteils bereichsweise von Aluminium umgeben sein.

Die Temperaturbehandlung wird in zweckmäßiger Weise so geführt, dass das Aluminium zumindest teilweise aufschmilzt und mit dem Titanoxid, bzw. mit den möglichen weiteren reaktiven Komponenten reagiert (Umsetzungsreaktion). Eine Umsetzungsreaktion unterhalb der Solidustemperatur des Aluminiums ist grundsätzlich thermodynamisch möglich, jedoch langwierig. Als Reaktionsprodukte entstehen Titanaluminide und Aluminiumoxid.

Der Reaktionsverlauf der Umsetzungsreaktion ist neben der reaktiven Komponente der Preform von der Zusammensetzung der Aluminiumlegierung abhängig. Es hat sich gezeigt, dass ein Siliziumanteil in der Aluminiumlegierung die Bildung von reinen Titanaluminiden behindert. Zudem wird durch das Silizium ein spontaner unkontrolliert ablaufender Reaktionsablauf begünstigt. Aus gießtechnischen Gründen ist eine vollständig siliziumfreie Aluminiumlegierung schwer zu realisieren, der Siliziumanteil in der Legierung sollte jedoch nicht mehr als 7,3 Gew. % betragen. Dies entspricht dem Siliziumanteil einer AlSi7Mg-Legierung. Bevorzugt liegt der Siliziumanteil jedoch geringer als 2 Gew. %, besonders bevorzugt geringer als 1 Gew.%.

Die nichtreaktiven Komponenten verhalten sich während der Reaktion weitgehend inert. Das entstandene Material ist ein Intermetallic-Keramik-Verbundwerkstoff, im Folgenden vereinfachend IMC (intermetallic Composite) genannt.

Die Preformporosität zwischen 46 % und 60 % ist für eine vollständige Infiltration der Preform besonders geeignet. Bei niedrigeren Porositäten neigt die Preform beim Infiltrieren zum Verstopfen, bei höheren Porositäten weist die Preform möglicherweise keine ausreichende Festigkeit für die Druckinfiltration auf.

Durch die Porosität der Preform wird die Aluminiummenge festgelegt, die für die Umsetzungsreaktion zur Verfügung steht. Das stöchiometrische Verhältnis des Aluminiums zur reaktiven Komponente der Preform bestimmt die Reaktionsprodukte der Umsetzungsreaktion und die Eigenschaften des IMC-Werkstoffs. Die relativ hohe Porosität der Preform führt auch im Vergleich zum Stand der Technik zu einem erhöhten Anteil an Metallischen oder intermetallischen Phasen, wodurch die Wärmleitfähigkeit des IMC-Materials steigt und Wärmespannungen reduziert werden.

Zur weiteren Unterdrückung der Reaktivität während der Druckinfiltration kann die Preform eine zusätzliche nichtreaktive, anorganische Komponente aufweisen. Während der Druckinfiltration, die in der Regel weniger als 1 s andauert, findet somit keine autokatalytische (sich selbst aufrechterhaltende) Reaktion zwischen den Komponenten statt und somit wird das Druckgießwerkzeug nicht durch zusätzliche Reaktionswärme belastet.

Zusätzlich führen die nichtreaktiven Komponenten zu einer erhöhten Wärmeleitfähigkeit des IMC-Werkstoffs, was einen Aufbau von Thermospannungen bei hohen Betriebstemperaturen nachhaltig reduziert. Vorteilhafte nichtreaktive Komponenten mit einer hohen Wärmeleitfähigkeit sind Aluminiumnitrid und Siliziumkarbid. Auch verschiedene Metalle oder intermetallische Verbindungen können als nichtreaktive Komponenten zugefügt werden. Der Anteil der nichtreaktiven Komponenten liegt bevorzugt zwischen 5 % und 35 %.

Die Reaktivität zwischen der Preform und dem Metall wird während der Infiltration weiter verringert, wenn die reaktive Komponente Titanoxid ($TiO_2$) in ihrer Rutilmodifikation vorliegt. Die Rutilmodifikation des $TiO_2$ ist weniger reaktiv als eine Anastasmodifikation des TiO2.

Unter Druckgießen wird jedes Gießverfahren verstanden, dass unter erhöhtem Druck in einer metallischen Dauergießform durchgeführt wird. Die metallische Dauergießform wird entsprechend Druckgießwerkzeug genannt.

Eine bevorzugt Herstellung der keramischen Preform umfasst folgende Schritte:

- Mischen der Komponenten, gegebenenfalls Zugabe von Bindemitteln und Füllstoffen (Porosierungsmittel)
- sprühgranulieren des gemischten Pulvers,
- uniaxiales Pressen zu einem Grünkörper,
- gegebenenfalls entbindern des Grünkörpers.

Insbesondere das Sprühgranulieren führt in einer kostengünstigen Weise zu einem rieselfähigen Pulver, das sich wiederum sehr gut in dem kostengünstigen Pressverfahren des uniaxialen Pressens verarbeiten lässt. Füllstoffe dienen zur Einstellung der gewünschten Porosität der Preform. Bindemittel können gegebenenfalls auch zur Einstellung der Porosität geeignet sein.

Besonders rieselfähig und somit gut pressfähig wird das Pulver, wenn es nach dem Sprühgranulieren Aggregate aufweist, die Durchmesser zwischen 50 $\mu$m und 120 $\mu$m aufweisen. Unter Aggregaten werden hierbei feste, poröse, jedoch nicht chemisch gebundene Anhäufungen von einzelnen Pulverpartikeln verstanden. Die Pulverpartikel haben üblicherweise einen Durchmesser zwischen 0,5 $\mu$m und 5 $\mu$m.

Bei der Zugabe von verschiedenen zusätzlichen Komponenten wie z. B. von Fasern kann diese in zweckmäßiger Weise nach dem Sprühgranulieren im trockenen Zustand erfolgen.

Für ein besseres Handling kann die Preform bei einer Temperatur zwischen 900 °C und 1200 °C bevorzugt zwischen 1000 °C und 1100 °C gesintert werden.

Der Porendurchmesser der Preform beträgt zwischen 0,5 $\mu$m und 4 $\mu$m. Dieser Bereich ist günstig für das Fließverhalten des Aluminiums während der Infiltration.

Die offene Porosität der Preform liegt zwischen 46 % und 60 %, bevorzugt zwischen 52 % und 58 %. Zur Einstellung der gewünschten Porosität können Füllstoffe dem Grünkörper beigegeben werden, die nach dem Entbindern Poren hinterlassen.

Zu Erzielung eines pseudoplastischen Verhaltens des IMC-Werkstoffs können der Mischung metallische oder nichtmetallische Verstärkungsfasern beigefügt werden (im Folgenden zusammenfassend Fasern genannt). Werden metallische Fasern beigefügt, bestehen diese bevorzugt aus einer Kupfer-, Nickel, Eisen oder Titan-Legierung. Die Fasern können auch zum Schutz während der Reaktion eine Beschichtung aufweisen. Ein guter Verstärkungseffekt stellt sich mit Fasern von einer Länge zwischen 6 mm und 20 mm ein.

Fasern die eine Wellen-, Spiral- oder Zick-Zack-Geometrie aufweisen können sich im Verbundwerkstoff besser verankern und tragen somit zur Festigkeitssteigerung bei.

Die Temperatur des Aluminiums in einem Gießreservoir beträgt zwischen 500 °C und 730 °C, bevorzugt zwischen 600 °C und 700 °C. Niedrigere Temperaturen können zu einem vorzeitigen Erstarren der Schmelzen und zu einer unzureichenden Infiltration führen, höhere Temperaturen fördern eine unerwünschte, spontanen Reaktion zwischen Preform und Aluminium im Druckgießwerkzeug. Grundsätzlich ist bei geeigneter Temperierung der Preform und der Gießvorrichtung auch eine Infiltration des Aluminiums im thixotropen Zustand möglich.

Die Wärmebehandlung des PKI-Materials, die zur Umwandlung zum IMC-Werkstoff führt (Umsetzungsreaktion), findet bevorzugt zwischen 500 °C und 1000 °C, bevorzugt zwischen 580°C und 800°C statt. Aufheizraten und Haltezeiten hängen hierbei von der stöchiometrischen und mikrostrukturellen Zusammensetzung des PKI-Werkstoffes ab. Die Heizdauer in diesem Temperaturbereich liegt zweckmäßiger Weise zwischen 1 h und 8 h.

Eine weitere erfindungsgemäße Lösung der Aufgabe besteht in einem Bauteil mit einem Intermetallic-Keramik-Verbundwerkstoff (IMC) nach Anspruch 16. Dieser Werkstoff umfasst mindestens ein Titanaluminid und Aluminiumoxid (A1203) und weist einen Aluminiumanteil zwischen 40 % und 54 % auf. Der Aluminiumanteil in Volumen % ist bezogen auf eine keramische Ausgangsmischung, die mit dem Aluminiumanteil zu dem Intermetallic-Keramik-Verbundwerkstoff umgesetzt wird. Der Aluminiumanteil kann gebunden z. B. im Al2O3 oder als Aluminiumlegierung vorliegen. Insgesamt beträgt ein Siliziumanteil weniger als 2 % des Aluminiumanteils. Die resultierende Wärmeleitfähigkeit dieses Werkstoffes beträgt mehr als 15 W/mK, insbesondere mehr als 25 W/mK, besonders bevorzugt mehr als 30 W/mK. Die relativ hohe Wärmeleitfähigkeit wirkt sich positiv auf die Wärmespannungen des Materials aus.

Ein geringer E-Modul des Intermetallic-Keramik-Verbundwerkstoffs und ein geringer thermischer Ausdehnungskoeffizient (zwischen 7 x 10⁻⁶ K⁻¹ und 13 x 10⁻⁶ K⁻¹) wirken sich ebenfalls positiv auf Thermospannungen aus, die bei erhöhten Betriebstemperaturen auftreten.

Das Bauteil kann vollständig oder teilweise aus dem IMC-Werkstoff bestehen. In einer Ausführungsform der Erfindung weist das Bauteil neben dem IMC-Werkstoff Aluminium-Bereiche auf. Somit ist es möglich auf unterschiedliche Werkstoffanforderung in bestimmten Bauteilbereichen einzugehen.

Besonders geeignet ist die Verwendung des erfindungsgemäßen Bauteils als Bremsscheibenreibring oder als Bestandteil eines mechanischen Laders, da so die Hochtemperaturbeständigkeit und die Verschleißbeständigkeit des IMC-Werkstoff besonders genutzt werden können.

Vorteilhafte Ausgestaltungsformen der Erfindung werden in den folgenden Beispielen und der einzigen Figur näher erläutert.

Dabei zeigt:

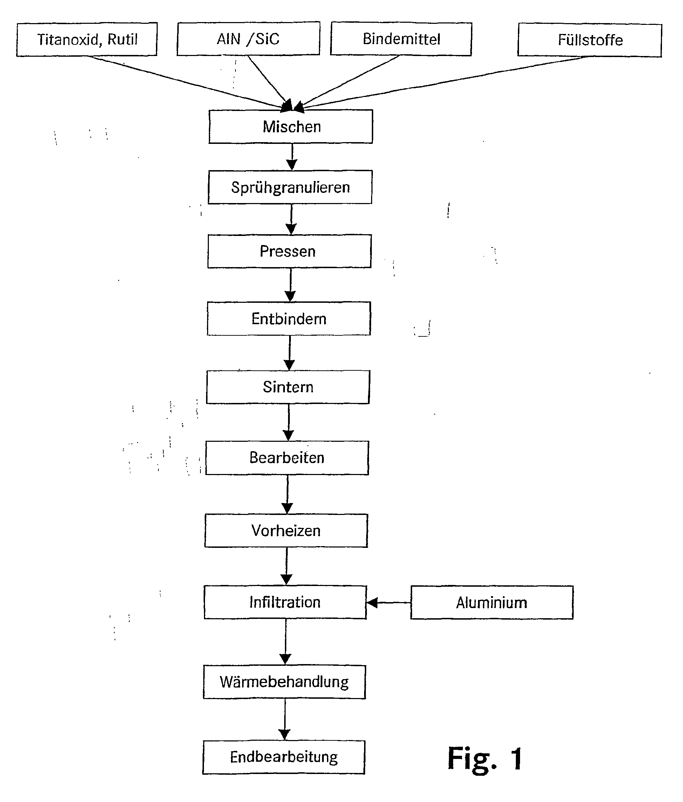

Fig. 1,    eine schematische Darstellung des Verfahrens zur Herstellung eines IMC-Werkstoffs.

Beispiel 1

Das erfindungsgemäße Verfahren, dass in einer vorteilhaften Ausführungsform in Fig. 1 dargestellt ist umfasst folgende Schritte.

Es wird eine Mischung aus 80 % Titanoxid in der Rutilmodifikation 20 Vol. % AlN gemischt. Die mittlere Korngröße beider Komponenten liegt bei etwa 3 $\mu$m. Hinzu kommen zusammen etwa 10 Vol % Bindemittel Polyvinylalkohol, Füllstoffe und Lösungsmittel (in der Regel Wasser). Als Füllstoff können z. B. Polyclycole oder Cellulosederivate verwendet werden. Gegebenenfalls können der Mischung noch weitere organische Hilfsstoffe oder weitere keramische Komponenten wie beispielsweise Al203 zugegeben werden.

Die wässrige Mischung wird sprühgranuliert, wobei sie in einen Sprühturm in einen Heißluftstrahl eingedüst werden. Es entstehen hierbei weiche Aggregate, die einen Durchmesser von etwa 90 $\mu$m aufweisen. Die Verbindung der Aggregate beruht auf Verzahnung und auf Adhäsion. Die Größe der Aggregate wirkt sich vorteilhaft auf die Rieselfähigkeit und die Pressfähigkeit des Pulvers aus. Die Bindung der Aggregate ist derart eingestellt, dass sie bei einem folgenden Pressvorgang zerfallen.

Das Sprühgranulat wird in eine ringförmige Pressform eingerüttelt, wobei durch das Rütteln (Vibration) das Granulat verdichtet wird. Ein Pressstempel wird mit einem Pressdruck von etwa 500 bar in die Pressform gedrückt. Nach dem Herausfahren des Pressstempels wird ein ringförmiger Grünkörper entformt.

Der Grünkörper wird bei etwa 400 °C an Luft entbindert, wobei die Bindemittel und die Füllstoffe thermisch zersetzt werden und in Form von flüchtigen Komponenten aus dem Grünkörper entweichen. Die Entbinderung kann je nach verwendeten Bindemittel oder Füllstoffen auch unter inerter Atmosphäre z. B. unter Stickstoff erfolgen. Der entbinderte Grünkörper wird nun als Preform bezeichnet.

Zur besseren Weitehrbehandlung wird die Preform bei 1000 °C unter Stickstoff gesintert. Die Sinterung kann auch unter Luft erfolgen, es muss jedoch dabei berücksichtigt werden, dass bei Beimischung der genannten nichtreaktiven Komponenten bei etwa 1150 °C eine Oxidation des Aluminiumnitrides einsetzt. Bei der Verwendung von SiC als nichtreaktive keramische Komponente findet bei einer Sinterung an Luft im angegebenen Temperaturbereich keine Oxidation statt.

Durch die Sinterung erhöht sich die Festigkeit der Preform gegenüber der nicht gesinterten Preform. Zwischen den einzelnen Partikeln bilden sich erste Sinterhälse aus, die gegenüber der Verklammerung, die nach dem Pressen vorliegt, einen Festigkeitszuwachs bewirken. Die Preform weist eine offene Porosität von 54 % mit einem mittleren Porendurchmesser von etwa 4 $\mu$m auf.

Durch die Sinterung wird eine Volumenschrumpfung von 0,5 % bis 2 % hervorgerufen. Eine Nachbearbeitung der gesinterten Preform ist dennoch nicht zwingend notwendig, da der einmal bestimmte Volumenschwund in einer Serienproduktion als Aufmaß im Presswerkzeug mit berücksichtigt werden kann.

Es ist möglich, auf die Sinterung zu verzichten, da die ungesinterte Preform grundsätzlich eine ausreichende Festigkeit zu Druckinfiltration aufweist. Dennoch erfordert das Handling einer ungesinterten Preform mehr Sorgfalt und Aufwand als das einer gesinterten Preform.

Alternative Herstellungsverfahren für die Preform sind beispielsweise das Schlickergießen, das kaltisostatische Pressen, das heißisostatische Pressen oder das Kernschießen.

Zur Druckinfiltration wird die Preform in einem geeigneten Ofen bei einer Temperatur zwischen 500 °C und 700 °C vorgeheizt. Das Vorheizen erfolgt entweder in einem Kammerofen oder bei einer Großserienproduktion in einem Durchlaufofen. Die Vorheizdauer ist so gewählt, dass die Preform gleichmäßig durchgeheizt wird. Die genaue Temperatur hängt von der Wärmekapazität der Preform deren Ausdehnungskoeffizienten und der Temperatur des zu infiltrierenden Aluminiums ab.

Die vorgeheizte Preform wird in ein Druckgießwerkzeug eingelegt. Das Werkzeug ist derart ausgelegt, dass die Biegemomente, die auf die Preform wirken, minimiert sind. Dies betrifft die Kräfte, die durch eine Fixierung im Werkzeug auftreten und die Kräfte, die durch die Druckeinwirkung des Aluminiums entstehen.

Die Druckinfiltration erfolgt nach den selben Grundlagen wie ein herkömmlicher Druckgussvorgang, mit einer 1. Phase, einer zweiten Phase und einer 3. Phase.

Aluminiumschmelze einer Al-Mg-Legierung, die in einem Reservoir eine Temperatur von 700° C aufweist wird über Befüllvorrichtungen zu dem Druckgießwerkzeug geleitet. Die 1. Phase des Druckgussvorgangs wird soweit geführt, dass ein Anschnitt des Druckgießwerkzeuges und bis zu 60 % eines Formhohlraums, der die Preform umschließt, mit der Aluminiumschmelze gefüllt ist. Die 1. Phase wird mit vergleichsweise geringen Kolbengeschwindigkeit von 0,1 m/s bis 0,8 m/s geführt (entspricht der Geschwindigkeit der Aluminiumschmelze). Durch die geringe Schmelzengeschwindigkeit wird die mechanische Belastung der Preform eingeschränkt.

In der anschließenden zweiten Phase wird die Geschwindigkeit auf 1 m/s bis 2,5 m/s gesteigert. Die Geschwindigkeitssteigerung dient dazu, in einer dritten Phase ein Druck aufzubauen. Der Druck beträgt üblicherweise zwischen 600 bar und 1000 bar und ist von der Geometrie des Formhohlraums und den Kolbengeschwindigkeiten der vorangegangen 1. und 2. Phase abhängig.

Während der dritten Phase erfolgt eine Nachverdichtung des Aluminiums und die Infiltration der Preform. Die Infiltrationstemperatur der Aluminiumschmelze liegt über der Liquidustemperatur der Aluminiumlegierung bzw. über dem Schmelzpunkt des Aluminiums, da ansonsten möglicherweise eine vorzeitigen Erstarrung des Aluminiums eintritt und die Infiltration abbricht.

Andererseits führt eine zu hohe, kritische Temperatur zu einer vorzeitigen Reaktion zwischen der Preform und dem Aluminium. Eine derartige Reaktion läuft spontan und von selbst ab, sie kann nicht abgebrochen werden. Die hierbei erzeugte Wärmemenge ist so groß, dass das Druckgießwerkzeug unbrauchbar wird. Die kritische Temperatur ist unter anderem von der Zusammensetzung der Preform, der Temperatur der Preform und der Temperierung des Druckgießwerkzeuges abhängig. Durch die Wahl der Preform-Rohstoffe, dem Titanoxid in der Rutilmodifikation und dem Aluminiumnitrid wird die Möglichkeit einer derartigen Reaktion stark gehemmt. Aluminiumnitrid ist als Rohstoff eine fakultative Mischungsbeigabe, es weist in vorteilhafter Weise eine hohe Wärmeleitfähigkeit auf, führt jedoch auch zu höheren Rohstoffkosten.

Eine genaue Angabe der kritischen Temperatur ist auf Grund der verschiedenen Einflussfaktoren nicht möglich. Im angegebenen Beispiel liegt die kritische Temperatur des Aluminiums (im Gießreservoir) oberhalb von 730 °C.

Die Einstellung der Aluminiumtemperatur erfolgt empirisch und ist vom Aufbau der Druckgießmaschine abhängig, da der Wärmeverlust des Aluminiums vom Reservoir über die Befüllungseinrichtungen bis in das Druckgießwerkzeug bauartbedingt ist. Die verwendete Aluminiumlegierung ist eine AlSiMg-Legierung mit ca. 1% Legierungsbestandteile. Weitere gebräuchliche Gießlegierungen wie die AlSi7Mg sind ebenfalls anwendbar, solange der Siliziumanteil unter 7,3% liegt. Ebenfalls vorteilhaft ist Reinaluminium, dass jedoch aus gießtechnischer Sicht einen höheren Aufwand erfordert.

Das durch die Infiltration erhaltene PKI-Material wird im Weiteren einer Wärmebehandlung unterzogen. Hierzu wird der PKI-Werkstoff bis über die Solidustemperatur der Aluminiumlegierung bzw. über den Schmelzpunkt des Aluminiums aufgeheizt. Sobald die flüssige Metallphasen im PKI-Werkstoff vorhanden sind, setzt die Reaktion ein.

Die Reaktionstemperatur wird bevorzugt knapp (10°-50°C) oberhalb der jeweiligen Solidustemperatur gehalten. Die Solidustemperatur ändert sich während Reaktion, da verschiedene Bestandteile der Legierung verbraucht werden. Ein Überschreiten der Liquidustemperatur sollte im Anfangsstadium der Umsetzungsreaktion vermieden werden. Die Reaktion läuft in idealisierter Form wie folgt ab:

$$Al + TiO_2 \rightarrow Al_3Ti + Al_2O_3 \qquad \text{(Gleichung 1)}$$

(Stöchiometriekoeffizienten werden in Gleichung 1 nicht berücksichtigt.)

Als Endprodukt der Reaktion liegt ein IMC-Werkstoff vor, der aus 35 % $Al_3Ti$, 30 % $Al_2O_3$, 25 % AlN und 10 % Al besteht. Der Anteil des Rest-Aluminiums kann durch die Porosität der Preform und durch den Anteil des AlN in der Preform gesteuert werden. Intermetallische Verbindungen von Legierungsbestandteilen der Aluminiumlegierung können ebenfalls Bestandteil des IMC-Materials sein. Die Legierungsbestandteile könne auch im Kristallgitter der Titanaluminide eingelagert sein. Aus diesen Gründen sind möglichst niedrig legierte Aluminiumlegierung bis hin zu Reinaluminium vorteilhaft, soweit dies aus gießtechnischen Gründen zweckmäßig ist.

Beispiel 2

Die Herstellung der Preform erfolgt analog dem Beispiel 1, die Infiltration erfolgt jedoch durch ein Squeeze-Casting-Verfahren.

Eine bei 600 °C vorgeheizte Preform wird in ein Squeeze-Casting-Werkzeug gelegt, dass im Wesentlichen einem Druckgießwerkzeug entspricht. Die Infiltration erfolgt kontinuierlich, angetrieben durch einen Squeeze-Kolben mit einer Vorschubgeschwindigkeit von 200 mm/s. Der Squeeze-Kolben hat einen Durchmesser von 80 mm, der Enddruck beträgt 800 bar. Die Infiltration ist in ca. 0,5 s abgeschlossen. Die genannten Parameter sind von der Geometrie eines zu erzeugenden PKI-Bauteils abhängig.

Beispiel 3

Entsprich den Beispielen 1 oder 2, der Mischung werden jedoch 10 Vol % metallische Fasern zugemischt. Die Fasern bestehen aus einer Eisen-Kobalt-Nickel-Legierung. Sie weisen eine mittlere Länge von 10 mm und einen Durchmesser von 170 $\mu$m auf. Die Fasern besitzen einen E-Modul von ca. 300 MPa und eine Zugfestigkeit von 600 MPa. Sie sind bis 1100 °C an Luft oxidationsbeständig.

Beispiel 4

Ein Bremsscheibenreibring, aus einem IMC-Werkstoff, umfassend folgende Phasenzusammensetzung (in Vol %):

40 % Al3Ti
35 % Al2O3
25 % AlN

Die A13Ti-Phase ist weitgehend dreidimensional vernetzt.. Die anderen Phasen sind zumindest teilweise dreidimensional vernetzt. Der Werkstoff weist eine Wärmeleitfähigkeit von 24 W/mK auf. Der E-Modul des Werkstoffs beträgt 110 MPA, die Biegefestigkeit 250 MPa und der thermische Ausdehnungskoeffizient 8 $10^{-1}K^{-1}$.

Das Zusammenwirken der charakteristischen Werkstoffeigenschaften, einem relativ niedrigen E-Modul (E) und Ausdehnungskoeffizienten ($\alpha$) und einer relativ hohen Wärmeleitfähigkeit ($\lambda$) bzw. Biegefestigkeit ($\sigma$) führt zu vorteilhaft geringen Wärmespannungen TS, die folgender Proportionalität unterliegen:

$$TS \sim \alpha \times E/(\lambda \times \sigma) \qquad\qquad Gleichung\ 2$$

Beispiel 6

Ein Bremsschiebenreibring aus einem IMC-Werkstoff, umfassend folgende Phasenzusammensetzung (in Vol %):

35 % $Al_3Ti$
35 % $Al_2O_3$
20 % SiC
10 % $Al_3Ni$-Fasern.

Die $Al_3Ti$-Phase ist ebenfalls dreidimensional vernetzt und der Werkstoff weist ähnliche Eigenschaften wie der in Beispiel 5 auf. Die Fasern sind in eine Matrix, die aus den $Al_3Ti$, $Al_2O_3$ und SiC-Phasen gebildet wird, eingebunden. Eine Grenzfläche zwischen den Fasern und der Matrix ist derart gestaltet, dass bei einer Zug- oder Biegebelastung diese eine geringere Festigkeit aufweist als die Matrix oder die Fasern. Dies führt dazu, dass Energie bei der Trennung der Grenzfläche verzehrt wird und der Werkstoff ein pseudoduktiles Bruchverhalten aufweist. Die Bruchdehnung wird gegenüber dem unverstärkten Werkstoff erhöht.

Beispiel 7

Ein Verbundbauteil umfassend einen IMC-Werkstoff analog der Beispiele 4 bis 6 wird nach einem Verfahren analog der Beispiele 1 bis 3 hergestellt. Die Preform und der Formhohlraum sind geometrisch jedoch so aufeinander abgestimmt, dass nach dem Erstarren dass Bauteil sowohl Bereiche aus PKI-Material und Aluminium aufweist. Aluminium-Bereiche und PKI-Bereiche sind fest miteinander verbunden. Das PKI-Material wird anschließend selektiv über induktive Beheizung erhitzt und zu dem IMC-Werkstoff umgewandelt. Die Aluminiumbereiche bleiben hiervon unberührt. Das fertige Bauteil weist demnach an Bereichen, die beispielsweise einem hohen Verschleiß unterliegen den IMC-Werkstoff auf, Bereiche, die z. B. einer hohen Duktilität bedürfen wie Anbindungsbereiche an weitere Bauteile sind in dem dafür geeigneten Aluminium ausgestaltet.

Eine selektive Beheizung kann ebenfalls durch eine andere geeignete Heizquelle, z. B. durch eine Laserbehandlung oder eine Infrarotquelle erfolgen.

**Patentansprüche**

1. Verfahren zur Herstellung eines Bauteils aus einem einen Intermetallic-Keramik-Verbundwerkstoff unter Anwendung folgender Schritte:

   • Herstellen einer Mischung aus mindestens einer gegenüber einer Aluminiumschmelze reaktiven Komponente, die
   • mindestens ein Titanoxid umfasst und Hilfsstoffen,
   • Herstellung einer keramischen Preform aus der Mischung,
   • wobei die keramische Preform eine offene Porosität zwischen 46 Vol% und 60 Vol% aufweist,
   • Einlegen der keramischen Preform in ein Druckgießwerk zeug, wobei die Preform einen Formhohlraum mindestens teilweise ausfüllt,
   • Druckbefüllung des Formhohlraums und gleichzeitiger Druckinfiltration der keramischen Preform mit einer Aluminiumlegierung zu einem Aluminium-Keramik-Verbundmaterial,
   • wobei die Aluminiumlegierung höchstens 7,3 % Silizium enthält,
   • Wärmebehandlung des Aluminium-Keramik-Verbundmaterials zur Umwandlung in einen Intermetallic-Keramik Verbundwerkstoff der dem Bauteil entspricht

   **dadurch gekennzeichnet ,**
   **dass** das Titanoxid zumindest teilweise als Rutilmodifikation ausgewählt wird und dass als Hilfsstoffe gegenüber einer Aluminiumschmelze nichtreaktive Komponenten, ausgewählt aus der Gruppe der Metalle, Aluminiumnitrid, Siliziumcarbid oder der intermetallischen Verbindungen, die eine Wärmeleitfähigkeit von mindestens 10 W/mK aufweisen, ausgewählt werden.

2. Verfahren nach Anspruch 2,
   **dadurch gekennzeichnet , dass** die Herstellung der keramischen Preform folgende Schritte umfasst:

   • Mischen der Komponenten mit Bindemitteln und/oder Porosierungsmittel,
   • Sprühgranulieren .der Mischung,
   • uniaxiales Pressen der Mischung zu einem Grünkörper,
   • Wärmebehandlung des Grünkörpers und thermische Zersetzung der Bindemittel und/oder Porosierungsmittel.

3. Verfahren nach Anspruch 2,
   **dadurch gekennzeichnet ,**
   **dass** der sprühgranulierten Mischung weitere Komponenten trocken zugemischt werden.

4. Verfahren nach Anspruch 2 oder 3,
   **dadurch gekennzeichnet ,**
   **dass** durch das Sprühgranulieren ein rieselfähiges Pulver mit Aggregaten im Durchmesser zwischen 50 und 120 $\mu$m hergestellt wird.

5. Verfahren nach einem der Ansprüche 1 bis 4,
   **dadurch gekennzeichnet ,**
   **dass** die keramische Preform bei einer Temperatur zwischen 900°C und 1200 °C gesintert wird.

6. Verfahren nach Anspruch 2,
   **dadurch gekennzeichnet ,**
   **dass** die keramische Preform Porendurchmesser zwischen 0,5 $\mu$m und 8 $\mu$m ausbildet.

7. Verfahren nach Anspruch 2,
   **dadurch gekennzeichnet ,**
   **dass** die Preform eine Porosität zwischen 52 Vol% und 58 Vol% ausbildet.

8. Verfahren nach einem der Ansprüche 1 bis 7,

**dadurch gekennzeichnet ,**
**dass** der Mischung metallische oder nichtmetallische Verstärkungsfasern beigefügt werden.

9. und Verfahren nach Anspruch 8,
   **dadurch gekennzeichnet ,**
   **dass** die metallischen Verstärkungsfasern auf der Basis von Nickel-, Eisen- oder Titan-Legierungen bestehen.

10. Verfahren nach Anspruch 8 oder 9,
    **dadurch gekennzeichnet ,**
    **dass** Verstärkungsfasern mit einer Länge zwischen 6 mm und 20 mm ausgewählt werden.

11. Verfahren nach einem der Ansprüche 8 bis 10,
    **dadurch gekennzeichnet** ,
    die Fasern mit einer Wellen-, Spiral- oder Zick-Zack-Geometrie ausgewählt werden.

12. Verfahren nach einem der Ansprüche 1 bis 12,
    **dadurch gekennzeichnet ,**
    **dass** als Temperatur des Aluminiums oder der Aluminiumlegierung während des Druckinfiltrieren ein Temperatur zwischen 500°C und 730°C gewählt wird.

13. Verfahren nach einem der Ansprüche 1 bis 13,
    **dadurch gekennzeichnet,**
    **dass** die Wärmebehandlung des Aluminium-Keramik-Verbundwerkstoffes zwischen 500°C und 1000°C, insbesondere zwischen 580°C und 800°C erfolgt.

14. Bauteil, umfassend einen Intermetallic-Keramik-Verbundwerkstoff,
    erhältlich durch ein Verfahren nach einem der vorangegangenen Ansprüche,
    wobei der Intermetallic-Keramik-Verbundwerkstoff mindestens eine Titanaluminid-Phase und mindestens eine Aluminiumoxid-Phase aufweist und wobei der Verbundwerkstoff die gegenüber einer Aluminiumschmelze nichtreaktiven Komponenten in einer Menge von 5 bis 35 Gew% enthält und das Bauteil eine Wärmeleitfähigkeit von mehr als 15 W/mK aufweist.

15. Bauteil nach Anspruch 16,
    **dadurch gekennzeichnet ,**
    **dass** der Intermetallic-Keramik-Verbundwerkstoff ein Elastizitätsmodul von weniger als 180 MPa aufweist.

16. Bauteil nach Anspruch 16 oder 17,
    **dadurch gekennzeichnet ,**
    **dass** der Intermetallic-Keramik-Verbundwerkstoff einen Ausdehnungskoeffizienten zwischen 7 x $10^{-6}$ $K^{-1}$ und 10 x $13^{-6}K^{-1}$ aufweist.

17. Verwendung eines Bauteils nach Anspruch 16 für eine Bremsscheibe, einen Bremsscheibenreibring oder einen Bestandteil einer mechanischen Laders.

**Claims**

1. Process for producing a component from an intermetallic/ceramic composite material using the following steps:

   • production of a mixture of at least one component, which is reactive with respect to aluminium melt and comprises at least one titanium oxide, and auxiliaries,
   • production of a ceramic preform from the mixture,
   • the ceramic preform having an open porosity of between 46% by volume and 60% by volume,
   • introduction of the ceramic preform into a pressure die-casting die, the preform at least partially filling a die cavity,
   • pressure filling of the die cavity and simultaneous pressure infiltration of the ceramic preform with an aluminium alloy to form an aluminium/ceramic composite material,
   • the aluminium alloy containing at most 7.3% of silicon,
   • heat treatment of the aluminium/ceramic composite material to convert into an intermetallic/ceramic composite material which corresponds to the component,

**characterized in that** the titanium oxide is at least partially selected as the rutile modification, and **in that** the auxiliaries selected are components that are nonreactive with respect to an aluminium melt, selected from the group consisting of the metals, aluminium nitride, silicon carbide or the intermetallic compounds which have a thermal conductivity of at least 10 W/mK.

2. Process according to Claim 1, **characterized in that** the production of the ceramic preform comprises the following steps:

   • mixing of the component with binders and/or pore-forming agents,
   • spray granulation of the mixture,
   • uniaxial pressing of the mixture to form a powder compact,
   • heat treatment of the powder compact and thermal decomposition of the binders and/or pore-forming agents.

3. Process according to Claim 2, **characterized in that** further components in dry form are admixed to the spray-granulated mixture.

4. Process according to Claim 2 or 3, **characterized in that** the spray granulation produces a free-flowing powder with aggregates with a diameter of between 50 and 120 $\mu$m.

5. Process according to one of Claims 1 to 4, **characterized in that** the ceramic preform is sintered at a temperature of between 900°C and 1200°C.

6. Process according to Claim 2, **characterized in that** the ceramic preform forms pore diameters of between 0.5 $\mu$m and 8 $\mu$m.

7. Process according to Claim 2, **characterized in that** the preform forms a porosity of between 52% by volume and 58% by volume.

8. Process according to one of Claims 1 to 7, **characterized in that** metallic or nonmetallic reinforcing fibres are added to the mixture.

9. Process according to Claim 8, **characterized in that** the metallic reinforcing fibres are based on nickel, iron or titanium alloys.

10. Process according to Claim 8 or 9, **characterized in that** reinforcing fibres with a length of between 6 mm and 20 mm are selected.

11. Process according to one of Claims 8 to 10, **characterized in that** the fibres are selected with a wavy, helical or zigzag geometry.

12. Process according to one of Claims 1 to 11, **characterized in that** a temperature of between 500°C and 730°C is selected as the temperature of the aluminium or the aluminium alloy during the pressure infiltration.

13. Process according to one of Claims 1 to 12, **characterized in that** the heat treatment of the aluminium/ceramic composite material takes place at between 500°C and 1000°C, in particular between 580°C and 800°C.

14. Component, comprising an intermetallic/ceramic composite material,

   • obtainable by a process according to one of the preceding claims,
   • the intermetallic/ceramic composite material including at least one titanium aluminide phase and at least one aluminium oxide phase, and the composite material containing the components that are nonreactive with respect to an aluminium melt in an amount of from 5 to 35% by weight, and the component having a thermal conductivity of more than 15 W/mK.

15. Component according to Claim 14, **characterized in that** the intermetallic/ceramic composite material has a modulus of elasticity of less than 180 MPa.

**16.** Component according to Claim 14 or 15, **characterized in that** the intermetallic/ceramic composite material has an expansion coefficient of between 7 x 10$^{-6}$ K$^{-1}$ and 10 x 10$^{-6}$K$^{-1}$.

**17.** Use of a component according to Claim 16 for a brake disc, a brake disc friction ring or a component of a mechanical supercharger.

**Revendications**

**1.** Procédé de production d'un élément constitutif en un matériau composite intermétallique-céramique, comprenant les étapes suivantes:

• préparer un mélange d'au moins un composant réactif par rapport à un bain d'aluminium en fusion, et qui comprend au moins un oxyde de titane et des substances auxiliaires,
• préparer une préforme céramique avec ce mélange,
• la préforme céramique présentant une porosité ouverte comprise entre 46 % en volume et 60 % en volume,
• placer la préforme céramique dans un outil de coulée sous pression, la préforme remplissant au moins partiellement une cavité de moulage,
• remplir sous pression la cavité de moulage et en même temps infiltrer sous pression la préforme céramique avec un alliage d'aluminium pour obtenir une matière composite aluminium-céramique,
• l'alliage d'aluminium contenant au maximum 7,3 % de silicium,
• traiter thermiquement la matière composite aluminium-céramique pour la convertir en un matériau composite intermétallique-céramique, qui correspond à l'élément constitutif,

**caractérisé en ce que** l'on choisit l'oxyde de titane au moins partiellement sous la forme d'une modification en rutile et **en ce que** l'on choisit comme substances auxiliaires des composants non réactifs par rapport à un bain d'aluminium en fusion, choisis dans le groupe composé des métaux, du nitrure d'aluminium, du carbure de silicium ou des composés intermétalliques, qui présentent une conductibilité thermique d'au moins 10 W/mK.

**2.** Procédé selon la revendication 1, **caractérisé en ce que** la préparation de la préforme céramique comprend les étapes suivantes:

• mélanger les composants avec des liants et/ou des agents générateurs de pores,
• granuler le mélange par projection,
• presser le mélange de façon uniaxiale pour en faire un corps vert,
• traiter thermiquement le corps vert et décomposer thermiquement les liants et/ou les agents générateurs de pores.

**3.** Procédé selon la revendication 2, **caractérisé en ce que** l'on ajoute à sec d'autres composants au mélange granulé par projection.

**4.** Procédé selon la revendication 2 ou 3, **caractérisé en ce que** l'on produit par la granulation par projection une poudre s'écoulant librement avec des amas d'un diamètre compris entre 50 et 120 $\mu$m.

**5.** Procédé selon l'une quelconque des revendications 1 à 4, **caractérisé en ce que** la préforme céramique est frittée à une température comprise entre 900°C et 1200°C.

**6.** Procédé selon la revendication 2, **caractérisé en ce que** la préforme céramique présente des pores d'un diamètre compris entre 0,5 $\mu$m et 8 $\mu$m.

**7.** Procédé selon la revendication 2, **caractérisé en ce que** la préforme présente une porosité comprise entre 52 % en volume et 58 % en volume.

**8.** Procédé selon l'une quelconque des revendications 1 à 7, **caractérisé en ce que** l'on ajoute au mélange des fibres de renforcement métalliques ou non métalliques.

**9.** Procédé selon la revendication 8, **caractérisé en ce que** les fibres de renforcement métalliques se composent d'alliages à base de nickel, de fer ou de titane.

**10.** Procédé selon la revendication 8 ou 9, **caractérisé en ce que** l'on choisit des fibres de renforcement d'une longueur comprise entre 6 mm et 20 mm.

**11.** Procédé selon l'une quelconque des revendications 8 à 10, **caractérisé en ce que** l'on choisit des fibres avec une géométrie ondulée, en spirale ou en zigzag.

**12.** Procédé selon l'une quelconque des revendications 1 à 11, **caractérisé en ce que** l'on choisit une température comprise entre 500°C et 730°C comme température de l'aluminium ou de l'alliage d'aluminium pendant l'infiltration sous pression.

**13.** Procédé selon l'une quelconque des revendications 1 à 12, **caractérisé en ce que** l'on effectue le traitement thermique du matériau composite aluminium-céramique entre 500°C et 1000°C, en particulier entre 580°C et 800°C.

**14.** Elément constitutif, comprenant un matériau composite intermétallique-céramique, réalisable par un procédé selon l'une quelconque des revendications précédentes, dans lequel le matériau composite intermétallique-céramique comprend au moins une phase d'aluminiure de titane et au moins un phase d'oxyde d'aluminium et dans lequel le matériau composite contient les composants non réactifs par rapport à un bain d'aluminium en fusion en une quantité de 5 à 35 % en poids et l'élément constitutif présente une conductibilité thermique de plus de 15 W/mK.

**15.** Elément constitutif selon la revendication 14, **caractérisé en ce que** le matériau composite intermétallique-céramique présente un module d'élasticité de moins de 180 MPa.

**16.** Elément constitutif selon la revendication 14 ou 15, **caractérisé en ce que** le matériau composite intermétallique-céramique présente un coefficient de dilatation compris entre $7 \times 10^{-6}$ K$^{-1}$ et $10 \times 10^{-6}$ K$^{-1}$.

**17.** Utilisation d'un élément constitutif selon la revendication 16 pour un disque de frein, une bague de friction de disque de frein ou une pièce de chargeur mécanique.

| Titanoxid, Rutil | AIN /SiC | Bindemittel | Füllstoffe |
|---|---|---|---|

Mischen

↓

Sprühgranulieren

↓

Pressen

↓

Entbindern

↓

Sintern

↓

Bearbeiten

↓

Vorheizen

↓

Infiltration ← Aluminium

↓

Wärmebehandlung

↓

Endbearbeitung

**Fig. 1**